# EUROPEAN PATENT APPLICATION

(11) **EP 2 639 103 A1**
(43) Date of publication of application: **18.09.2013**
(21) Application number: 12160020.9
(22) Date of filing: 16.03.2012
(51) Int. Cl.: B60N 3/00, A47B 83/02

(54) **Seat-supported stowable tray table provided with a hinged stand**

(71) Applicant: Bombardier Transportation GmbH, 10785 Berlin (DE)
(72) Inventor: Freestone, Alan, DERBY, Derbyshire DE22 2UX (GB); Griggs, Paul E., AMBERGATE, Derbyshire DE56 2JL (GB)
(74) Representative: Broydé, Marc

(57) **Abstract**

A seat-supported tray table assembly for movable attachment to a seat (12), in particular of a public transportation vehicle, consists of a tray table (14) provided with rotation bearing means for pivotal movement of the tray table (14) relative to the seat (12) about a first rotation axis (X1) in a first rotation direction (D1) from a stowed position to a deployed position relative to the seat (12), wherein the tray table (14) is provided with a flat upper face (18) and a hinged stand (28) hinged to the tray table (14) for movement relative to the tray table (14) about a second rotation axis (X2) parallel to the first rotation axis (X1) in a second rotation direction (D2) opposed to the first rotation direction (D1) from a recessed position in which the hinged stand (28) is received in an upper recess (26) formed on the tray table to a protruding position. The hinged stand (28) in the recessed position is flush with the flat upper face (18) of the tray table to form a planar upper surface. The hinged stand (28) has a free edge (32) that forms a contact surface for an inclined item (34) supported on the flat upper face (18) of the tray table (14) when the tray table (14) is in the deployed position and the hinged stand (28) is in the protruding position.

## Description

### TECHNICAL FIELD OF THE INVENTION

This invention relates a seat-supported stowable tray table provided with a hinged stand for holding or supporting a book or laptop. It also relates to a vehicle seat, in particular a seat of public transportation vehicle, provided with such a tray table.

### BACKGROUND ART

A reading tray for mounting on a seat is disclosed in US7073449. The tray comprises opposite, parallel and substantially planar top and bottom sides. A space is provided in the centre of the top side and extends partially through the tray to receive a book support panel. An arm support assembly is connected to the book support panel for supporting the book support panel in an open, inclined position, or in an alternate, closed position. In the closed position, the book support panel fits closely within the space with an upper face of the support panel level with the top side of the tray. The arm support assembly is made of several parts and therefore complex and expensive. As the arm support assembly is hidden behind the book support panel and not readily visible the user may, in an attempt to close the book support panel, pinch his fingers between the arm support assembly and the tray or book support panel and injure himself.

WO 2007/123615 discloses a tray table configured for pivotal movement in a first pivotal direction between a stowed position and a deployed position. Consistent with its traditional uses, the tray table is designed to function as a stable surface on which to place a food tray or similar items. Accordingly, the table comprises a tray table which, when deployed, is positioned substantially horizontally with its upper face being flat or substantially so. The tray table is provided with a recess for receiving an object support for supporting a laptop computer, portable DVD player, book, or another object in a position facilitating its operation or use. The object support, however, is made of several parts articulated to one another and/or to the tray table. Folding back the object support into the recess may prove difficult, in particular in an emergency situation. In such a case, the object support may prevent the passenger from putting back the tray table in its upward position. Moreover, the component assembly is complex and expensive and may easily be damaged during use.

### SUMMARY OF THE INVENTION

It is an object of the present invention in view of the above mentioned problems to provide a tray table assembly including a hinged stand for an inclined item such as a book or laptop computer, that is both easy to manufacture and to handle.

According to the invention, there is provided a tray table assembly for movable attachment to a seat, in particular of a public transportation vehicle, consisting of:
- a tray table provided with rotation bearing means for pivotal movement of the tray table relative to the seat about a first rotation axis in a first rotation direction from a stowed position to a deployed position relative to the seat, wherein the tray table is provided with a flat upper face and an upper recess and
- a hinged stand hinged to the tray table for movement relative to the tray table about a second rotation axis parallel to the first rotation axis in a second rotation direction opposed to the first rotation direction from a recessed position in which the hinged stand is received in the recess to a protruding position, wherein the hinged stand in the recessed position is flush with the flat upper face of the tray table to form a planar upper surface and wherein the hinged stand has a free edge that forms a contact surface for holding an inclined item resting on the flat upper face of the tray table and the free edge of the hinged stand when the tray table is in the deployed position and the hinged stand is in the protruding position.

Thanks to the opposite rotation directions of the hinged stand and of the tray table, the hinged stand is automatically moved back in the recessed position when the tray table is moved to the stowed position.

The hinged stand can be made of a single body and the assembly does not necessitate further movable parts, such that it can be kept simple and unexpensive. As no parts of the assembly are hidden, the risks of injury are minimised.

The rotation bearings can be any kind of bearings that allow rotation about a fixed rotation axis, or about a rotation axis that moves in a direction perpendicular to itself. Plain bearings consisting of a shaft or pin rotating and/or sliding in a hole or groove are contemplated as a preferred embodiment. According to an embodiment preferred for its simplicity and low cost, the first rotation axis is fixed relative to the seat. Alternatively, the tray table can be articulated to the seat with two connecting rods.

The second rotation axis is preferably fixed relative to the tray table.

The tray table has a distal edge substantially parallel to the first rotation axis. This distal edge can advantageously provided with a lip that protrudes upwardly when the tray table is in the deployed position, to provide a resting surface for an inclined item resting on the tray table and on the free edge of the hinged stand.

According to an embodiment, the hinged stand is such that in the protruding position, an inclined planar plate resting on the free edge of the tray table and on the free edge of the hinged stand has an inclination angle relative to the tray table that is substantially complementary to an inclination angle between the hinged stand and the tray table. In other words, the inclined planar plate is perpendicular to a geometrical plane containing the free edge of hinged stand and the second rotation axis. When such a plate bears on the edge of the hinged stand, the force applied to the hinged stand is directed towards the second rotation axis, such that the torque on the hinged stand is nil. As will be readily understood, the above-mentioned planar plate is representative of any flat item, or any item with a flat lower face, such as books or laptop computers.

According to an embodiment, the distance between the free edge of the hinged stand and the second rotation axis is between 1/3 and 2/3 of the distance between the free edge of the tray table and the second rotation axis.

Preferably, the planar upper surface in the deployed position is horizontal or substantially horizontal, such that the planar upper surface can be used for supporting items.

The seat-supported tray table assembly may be provided with abutment means for limiting the movement of the tray table in the first rotation direction and/or abutment means for limiting the movement of the hinged stand in the second rotation direction.

According to a preferred embodiment, the hinged stand has a substantially flat upper face that is flush with the flat upper face of the tray table to form the planar upper surface when the tray table is in the deployed position and the hinged stand is in the recessed position.

### DESCRIPTION OF THE FIGURES

An illustrative embodiment of the invention will now be described, purely by way of example and without limitation to the scope of the claims, and with reference to the accompanying drawings, in which:
- Fig. 1 is a side view a seat provided with a tray table assembly in a deployed position and a hinged stand in a recessed position;
- Fig. 2 is an isometric view of the seat-supported tray table assembly in the position of Fig. 1;
- Fig. 3 is a side view of the seat of Fig.1, with the seat-supported tray table assembly in the deployed position and the hinged stand in the protruding position;
- Fig. 4 is an isometric view of the seat-supported tray table assembly in the position of Fig. 3.

The same reference numerals refer to the same or corresponding parts in each of the figures.

### DETAILED DESCRIPTION OF PREFERED EMBODIMENTS

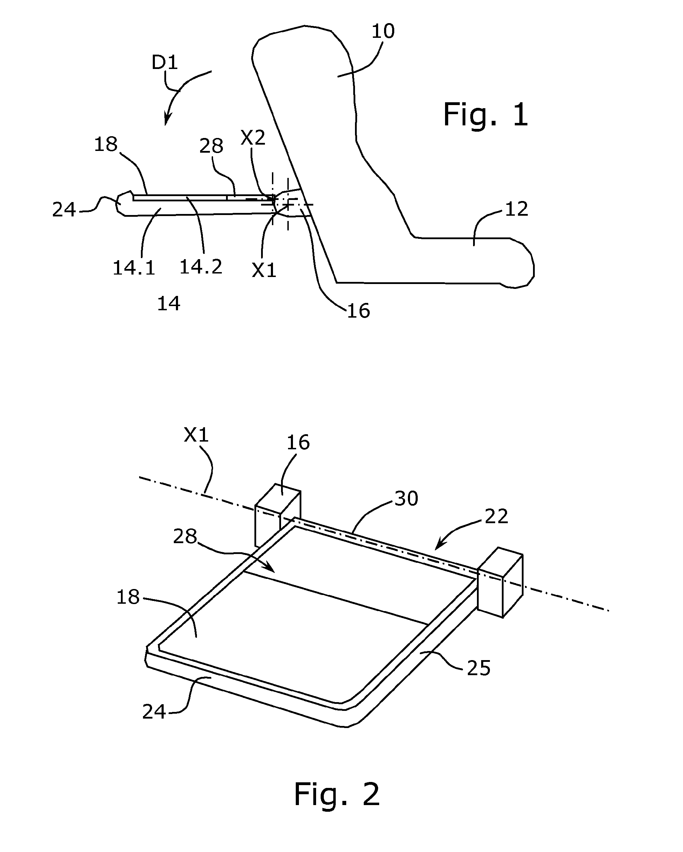

Referring to Figs. 1 and 2, the back **10** of a seat **12** of a public transportation vehicle facing a passenger sitting in the next row is provided with a stowable tray table **14** illustrated in a deployed position. The back **10** of the seat **12** is provided with two brackets **16,** which house rotation bearings allowing rotation of the tray table **14** about a first rotation axis **X1** in relation to the seat **12** between a stowed, substantially upright position and the deployed, substantially horizontal position illustrated in Fig. 1. A first rotation direction **D1,** from the stowed towards the deployed position is indicated on Fig. 1. The brackets **16** also include an abutment surface (not shown) to prevent movement of the tray table **14** in the first rotation direction **D1** beyond the deployed position.

The seat-supported movable tray table **14** is generally rectangular in shape, with a substantially flat upper face **18,** a lower face **20** substantially parallel to the upper face **18,** a rear edge **22** substantially parallel to the first rotation axis **X1** and close to the first rotation axis **X1** and to the back **10** of the seat, a free front edge **24,** which in the deployed position protrudes towards the passenger sitting in the next row and side edges **25** substantially perpendicular to the front and rear edges **24, 22.** The corners of the tray table may be rounded or bevelled to minimise the likelihood of injury to the passenger. If desired, the upper face **18** may include one or several small recesses for accommodating a beverage cup and/or other items. The free edge **24** of the tray table advantageously forms a lip that protrudes upwardly from the general plane of the flat upper face **18.**

The tray table is provided with a large upper recess **26** for accommodating a hinged stand **28** for a book or laptop. The hinged stand is hinged to the tray table for movement relative to the tray table about a second rotation axis **X2** parallel to the first rotation axis **X1.** In the example illustrated in the figures, the hinged stand **28** is a flat panel with a substantially flat upper face **30** and a free edge **32** substantially parallel to the second rotation axis **X2** at a distance from the first and second rotation axes, between the second rotation axis **X1** and the free edge **34** of the tray table **14.**

In a recessed position of the hinged stand **28** illustrated in Figs. 1 and 2, the upper face **30** of the hinged stand is flush with the flat upper face **18** of the tray table to form a common planar upper surface of the tray table assembly on which to place a food tray or similar items.

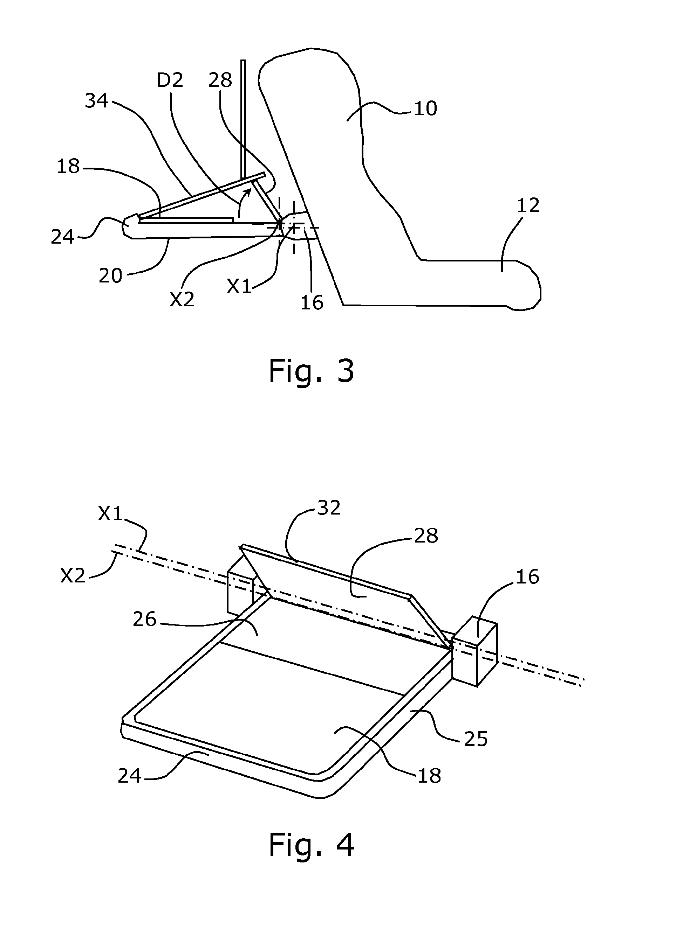

The hinged stand **28** pivots about the second rotation axis **X2** in a second rotation direction **D2** from the recessed position of Figs. 1 and 2 to the protruding position illustrated in Figs. 3 and 4.

Remarkably, the second rotation direction **D2** is opposed to the first rotation direction **D1.** As will be readily understood, folding the tray table **14** back to the stowed, upright position with the hinged stand **28** still erected in the protruding position will result in the hinged stand being pushed against the back **10** of the seat and automatically folded back to its recess position in the recess **26.**

In the protruding position, the free edge **32** of the hinged stand forms a contact surface for an inclined item **34** such as a book or laptop base resting on the edge **24** of the flat upper face **18** of the tray table when the tray table **18** is in the deployed position and the hinged stand **28** is in the protruding position.

The dimensions of the hinged stand **28** are such that in the protruding position, a flat item **28** such as an inclined planar plate resting on the free edge **24** of the tray table and on the free edge **32** of the hinged stand has an inclination angle α relative to the tray table that is substantially complementary to an inclination angle β between the hinged stand **28** and the tray table **24.** In other words, the hinged stand **28** is substantially perpendicular to the flat item **34,** such that the moment arm of the force applied by the flat item **34** to the hinged stand **28** is nil or close to nil. In Fig. 1, α is about **30°** and β about **60°.** Preferably, α is between **30°** and **45°,** and β between **45°** and **60°.**

The tray table may **14** be provided with abutment means for limiting the rotation of the hinged stand **28** in the second rotation direction **D2** beyond the protruding position.

The distance between the edge **32** of the hinged stand **28** and the second rotation axis **D2** is preferably between 1/3 and 2/3, and preferably between 1/3 and 1/2 of the distance between the edge **24** of the tray table and the second rotation axis **D2.**

In the example illustrated in the figures, the tray table consists of a lower panel **14.1** that forms the lower face **20** and the free edge **24** of the tray table and of a substantially rectangular covering panel **14.2** that forms the upper face **18.** The recess **26** is left without covering panel **14.2,** such that the depth of the recess corresponds to the thickness of the covering panel **14.2.** The covering panel **14.2** is consistent in thickness, width and material with the panel forming the hinged stand **28** to provide a uniform upper surface on which to place a food tray or a similar item.

Alternatively, the hinged stand **28** may consist in a U-shaped frame that is received in a recess consisting in a mating groove formed in the tray table. In such a case, the hinged stand **28** is flush with the upper face of the tray table when the hinged stand is in the recessed position.

The rotation bearings can be any device that allows constrained relative rotation between two or more parts, typically rotation or linear movement.

## Claims

1. A seat-supported tray table assembly for movable attachment to a seat (12), in particular of a public transportation vehicle, consisting of:
- a tray table (14) provided with rotation bearing means for pivotal movement of the tray table (14) relative to the seat (12) about a first rotation axis (X1) in a first rotation direction (D1) from a stowed position to a deployed position relative to the seat (12), wherein the tray table (14) is provided with a flat upper face (18) and an upper recess (26) and
- a hinged stand (28) hinged to the tray table (14) for movement relative to the tray table (14) about a second rotation axis (X2) parallel to the first rotation axis (X1) in a second rotation direction (D2) opposed to the first rotation direction (D1) from a recessed position in which the hinged stand (28) is received in the recess (26) to a protruding position,
**characterised in that** the hinged stand (28) in the recessed position is flush with the flat upper face (18) of the tray table to form a planar upper surface and **in that** the hinged stand (28) has a free edge (32) that forms a contact surface for an inclined item (34) resting on the flat upper face (18) of the tray table (14) and on the free edge (32) of the hinged stand (28) when the tray table (14) is in the deployed position and the hinged stand (28) is in the protruding position.

2. The seat-supported tray table assembly of claim 1, further **characterized in that** the first rotation axis (X1) is fixed relative to the seat (12).

3. The seat-supported tray table assembly of claim 1 or claim 2, further **characterized in that** the second rotation axis (X2) is fixed relative to the tray table (14).

4. The seat-supported tray table assembly of any one of the preceding claims, **characterised in that** the tray table (14) has a distal edge (24) substantially parallel to the first rotation axis (X1), the distal edge (24) being provided with a lip that protrudes upwardly when the tray table (14) is in the deployed position.

5. The seat-supported tray table assembly of claim 4, **characterized in that** the hinged stand (28) is such that in the protruding position, an inclined planar item (34) resting on the free edge (24) of the tray table (14) and on the free edge (32) of the hinged stand (28) has an inclination angle (α) relative to the tray table (14) that is substantially complementary to an inclination angle (β) between the hinged stand (28) and the tray table (14).

6. The seat-supported tray table assembly of any one of the preceding claims, **characterised in that** the distance between the free edge (32) of the hinged stand (28) and the second rotation axis (X2) is between 1/3 and 2/3 of the distance between the free edge (24) of the tray table (14) and the second rotation axis (X2).

7. The seat-supported tray table assembly of any one of the preceding claims, wherein the planar upper surface in the deployed position is horizontal or substantially horizontal.

8. The seat-supported tray table assembly of any one of the preceding claims, further provided with abutment means for limiting the movement of the tray table (14) in the first rotation direction (X1).

9. The seat-supported tray table assembly of any one of the preceding claims, further provided with abutment means for limiting the movement of the hinged stand (28) in the second rotation direction (X2).

10. The seat-supported tray table assembly of any one of the preceding claims, **characterised in that** the hinged stand (28) has a substantially flat upper face (30) that is flush with the flat upper face (18) of the tray table to form the planar upper surface when the tray table (14) is in the deployed position and the hinged stand (28) is in the recessed position.

11. A seat, in particular for a public transportation vehicle, provided with the seat-supported tray table assembly of any one of the preceding claims.
